# EUROPÄISCHE PATENTSCHRIFT

(11) **EP 3 243 608 B1**
(45) Veröffentlichungstag und Bekanntmachung des Hinweises auf die Patenterteilung: **06.04.2022**
(21) Anmeldenummer: 16168786.8
(22) Anmeldetag: 09.05.2016
(51) Int. Cl.: B25J 9/20, B25J 15/06, B25J 9/16

(54) **VERFAHREN ZUR ÜBERWACHUNG VON FUNKTIONSZUSTÄNDEN EINES DRUCKANGETRIEBENEN AKTORS UND DRUCKANTREIBBARER AKTOR**
METHOD FOR MONITORING THE FUNCTIONING STATES OF A PRESSURE DRIVEN ACTUATOR AND PRESSURE DRIVEN ACTUATOR
PROCEDE DE SURVEILLANCE DES ETATS DE FONCTIONNEMENT D'UN ACTIONNEUR COMMANDE PAR PRESSION ET ACTIONNEUR COMMANDE PAR PRESSION

(43) Veröffentlichungstag der Anmeldung: 15.11.2017
(73) Patentinhaber: J. Schmalz GmbH, 72293 Glatten (DE)
(72) Erfinder: Defranceski, Aline, 72160 Horb a.N. (DE); Dunkmann, Walter, 76530 Baden-Baden (DE)
(74) Vertreter: DREISS Patentanwälte PartG mbB

(56) Entgegenhaltungen:
- EP-A1- 2 522 471
- WO-A1-2005/111433
- DE-A1- 4 229 834
- DE-A1-102007 061 820
- US-A1- 2015 052 990
- US-B1- 6 176 113

## Beschreibung

Die Erfindung betrifft ein Verfahren zur Überwachung von Funktionszuständen eines druckangetriebenen Aktors gemäß dem Oberbegriff des Anspruchs 1 sowie einen druckantreibbaren Aktor zur Durchführung dieses Verfahrens.

Ein Anwendungsgebiet sind unterdruckangetriebene Aktoren, z.B. Unterdruckgreifer, Faltenbalge, oder Schlauchheber mit Hebeschläuchen, wie z.B. in der WO 2005/110907 A1 oder in der US 4,413,853 A beschrieben. Ein weiteres Anwendungsgebiet sind überdruckangetriebene Aktoren, z.B. pneumatische oder hydraulische Aktoren oder Manipulatoren.

Gemeinsam haben solche Aktoren, dass zur Betätigung des Aktors ein flexibel verformbarer Aktorraum mit Druck beaufschlagt wird. Hierbei kann es sich grundsätzlich um Überdruck (bei überdruckangetriebenen Aktoren) oder um Unterdruck (bei unterdruckangetrieben Aktoren) handeln. Die Beaufschlagung des Aktorraums erfolgt insbesondere mittels eines Arbeitsfluids, welches von einer Betriebsdruckversorgung (z.B. Druckquelle, Unterdruckpumpe, Ejektor o.ä.) bereitgestellt wird. Das Arbeitsfluid kann grundsätzlich einen Überdruck oder einen Unterdruck gegenüber der Umgebung aufweisen. Das Arbeitsfluid kann z.B. ein Hydraulikfkuid oder Druckgas wie z.B. Druckluft sein. Die vorliegende Erfindung betrifft insbesondere pneumatische Aktoren mit Luft als Arbeitsfluid.

Die genannten Aktoren sollen meist in komplexere Handhabungsprozesse oder Produktionsprozesse eingebunden werden, bei welchen z.B. Heben, Greifen, Spannen, Bearbeiten oder sonstige Handhabungen eines Gegenstandes erfolgen müssen. Insbesondere sind automatisiert ablaufende Prozesse erwünscht. Dies macht es erforderlich, dass der Betrieb der einzelnen Funktionseinheiten aufeinander abgestimmt und bedarfsgerecht erfolgt.

Um dies zu erreichen soll der Funktionszustand eines Aktors während seines Betriebs überwacht werden. Insbesondere sollen Funktionsdaten ermittelt werden, welche den Funktionszustand repräsentieren und welche z.B. den aktuellen Betriebszustand, Konfiguration, Belastungszustand o.ä. des Aktors betreffen.

Für diese charakteristischen Informationen gibt es zahlreiche verschiedene Einflussfaktoren. Zum einen können sich die mechanischen Eigenschaften der Aktoren im Laufe der Zeit verändern, z.B. aufgrund von Alterung oder Abnutzung der verwendeten Materialien. Ebenso können sich die hydromechanischen Eigenschaften des Arbeitsfluids mit der Zeit verändern. Außerdem hat der aktuelle Funktionszustand eines Aktors selbst Einfluss auf die messbaren charakteristischen Größen. Beispielsweise beeinflusst der aktuelle Kompressionszustand des Aktorraums und/oder der aktuelle Verformungszustand des Aktorraumes dessen Verhalten bei Anlegen einer Druckänderung.

Um zuverlässige und aussagekräftige Informationen über die Funktionszustände der einzelnen Einheiten in einer komplexeren Anlage zu erhalten, ist es bekannt, den verschiedenen druckangetrieben oder drucksteuernden Einheiten jeweils Sensoren zuzuordnen, welche verschiedene Eigenschaften überwachen. Beispielsweise kann ein Versorgungsdruck einer Unterdruckgreifvorrichtung überwacht werden (z.B. DE 10 2014 206 308 A1) oder die einem druckluftangetriebenen Ejektor zugeführte Versorgungs-Druckluft überwacht werden (z.B. WO 2013 120801 A1). Bekannt ist außerdem, mit Sensoren das Erreichen der jeweiligen Anfangs- oder End-Konfigurationen eines Aktors zu überwachen. Zur Überwachung verschiedenartiger Funktionszustände sind daher eine Mehrzahl von Sensoren mit zugehöriger Datenkommunikation und Steuerung erforderlich, was zu erhöhtem Konstruktionsaufwand und Fehleranfälligkeit führen kann.

Die DE 10 2007 061 820 A1 beschriebt ein Verfahren zum Betreiben einer Vakuumerzeugervorrichtung mit einem angeschlossenen Sauggreifer mit Merkmalen des Oberbegriffs des Anspruchs 1.

Der vorliegenden Erfindung liegt die Aufgabe zugrunde, auf konstruktiv einfache Weise eine zuverlässige Überwachung von Funktionszuständen eines druckangetrieben Aktors zu ermöglichen.

Diese Aufgabe wird durch ein Verfahren zur Überwachung von Funktionszuständen eines druckangetriebenen Aktors gemäß Anspruch 1 gelöst. Die Aufgabe wird entsprechend auch durch ein Verfahren zum Betreiben eines angetriebenen Aktors gelöst, welches die in Anspruch 1 genannten und nachfolgend näher erläuterten Verfahrensmerkmale aufweist.

Das Verfahren wird mit einem Aktor durchgeführt, welcher druckangetrieben ist und welcher einen Aktorraum aufweist, der flexibel verformbar ist. Hierzu ist der Aktorraum zumindest teilweise von einer flexiblen Wandung begrenzt. Insbesondere ist die Wandung flexibel und elastisch verformbar ausgebildet.

Zum Betreiben des Aktors wird der Aktorraum mit Druck (Überdruck oder Unterdruck) beaufschlagt. Der den Aktor antreibende Druck wird von einer Betriebsdruckversorgung bereitgestellt.

Zur Betätigung des Aktors wird gemäß dem Verfahren ein Arbeitsprozess durchgeführt, wobei der Arbeitsprozess mit einem Übergang des Aktors von einer Anfangskonfiguration zu einer Endkonfiguration einhergeht. Dieser Übergang wird durch die Beaufschlagung des Aktorraumes mit Druck herbeigeführt. Der Übergang von der Anfangskonfiguration zur Endkonfiguration ist mit einer Verformung des Aktorraumes verbunden, insbesondere mit einer Verformung der flexiblen Wandung des Aktorraumes.

Zur Überwachung des Funktionszustandes wird eine Sensoreinrichtung verwendet, welche zur Messung des den Aktorraum beaufschlagenden Druckes ausgestaltet ist. Mit der Sensoreinrichtung wird während des Übergangs von der Anfangskonfiguration zur Endkonfiguration, d.h. während des Arbeitsprozesses, der den Aktorraum beaufschlagende Druck in Abhängigkeit der Zeit gemessen. Hierzu kann die Sensoreinrichtung insbesondere den in dem Aktorraum herrschenden Druck messen. Denkbar ist auch die Messung des Druckes in einem Zugang zu dem Aktorraum, über welchen eine Verbindung mit der Betriebsdruckversorgung erfolgt.

Die Überwachung von Funktionszuständen wird dadurch ermöglicht, dass der den Aktorraum beaufschlagende Druck nicht allein durch die Betriebsdruckversorgung bestimmt wird. Vielmehr wird der zeitliche Druckverlauf für den Aktorraum bei einer bereitgestellten Betriebsdruckversorgung in vielfältiger Weise beeinflusst, beispielsweise durch Materialeigenschaften, durch die aktuelle Konfiguration des Aktors (z.B. Volumen des beaufschlagten Aktorraumes, Verformungszustand des Aktorraumes, Verformungszustand bzw. Kompressionszustand der den Aktorraum begrenzenden Wandung) sowie von dem auf den Aktor wirkenden Belastungszustand (z.B. aufgrund des Gewichts eines anliegenden Gegenstandes). Da der Aktorraum zumindest abschnittsweise von flexibel verformbaren Wandungen begrenzt ist, können sich die mechanischen Eigenschaften der Wandung und damit die Verformung des Aktorraumes in Abhängigkeit eines Drucks vergleichsweise stark ändern. Dies führt dazu, dass sich bei der genannten Art von Aktor mit flexiblen Wandungen eine charakteristische Abhängigkeit des den Aktorraum beaufschlagenden Drucks von den Funktionszuständen ergibt.

Aus den gemessenen Werten des den Aktorraum beaufschlagenden Drucks zu verschiedenen Zeitpunkten können daher Aussagen über den Funktionszustand und Belastungszustand des Aktors abgeleitet werden. Mittels der Sensormessergebnisse können dann Funktionsdaten ermittelt werden.

Die ermittelten Funktionsdaten repräsentieren den Funktionszustand. Der Funktionszustand und die Fukntionsdaten können dabei verschiedene Informationen betreffen. Nachfolgend sind beispielhaft derartige Informationen genannt:
- aktueller Betriebszustand des Aktors, z.B. eingefahrener und ausgefahrener Zustand (z.B Endlagenzustand eines Antriebsaktors), Greifzustand oder Freigabezustand (z.B. einer Unterdruckgreifvorrichtung);
- aktuelle Konfiguration und/oder Verformung des Aktors oder der den Aktorraum begrenzenden Wandung, z.B. Kompression eines Druckraumes, Grad der elastischen Verformung (z.B. eines Faltenbalg-Aktors oder eines verformbaren Unterdrucksaugers);
- aktueller Belastungszustand des Aktors, z. B. durch eine Gewichtskraft oder eine Trägheitskraft eines mit dem Aktor betätigten (z.B. gegriffenen, gehandhabten) Gegenstandes; insbesondere auch Erkennung der Anwesenheit oder Abwesenheit eines zu betätigenden Gegenstandes;
- aktueller Verschleißzustand des Aktors, z.B. veränderte Materialeigenschaften wie Steifigkeit oder Elastizität durch Materialermüdung (z.B. bei Faltenbalgen, Hebeschläuchen oder Unterdruckgreifern), veränderte Reibungswerte von aneinander reibenden Materialabschnitten; außerdem kann Verschleiß zu einer Veränderung der Abdichtungsqualität eines überdruckgetriebenen oder unterdruckgetrieben Aktors führen.

Mit dem Verfahren können vielfältige Informationen mit nur einer Sensoreinrichtung (z.B. nur einem Drucksensor) ermittelt werden. Im Vergleich zu Systemen mit komplexen Sensoreinrichtungen umfassend mehrere Sensoren kann die Fehleranfälligkeit reduziert werden. Die ermittelten Funktionsdaten können dazu eingesetzt werden, den Aktor bedarfsgerecht anzusteuern. Insbesondere ist es möglich, die Betriebsdruckversorgung in Abhängigkeit des zeitlichen Verlaufs des gemessenen Drucks zu regeln. Handelt es sich beispielsweise bei dem Aktor um eine Unterdruckgreifvorrichtung, so kann während des Greifvorgangs (Arbeitsprozess) die für den jeweiligen Typ des Gegenstands optimale Kraft für die gewünschte Handhabung ausgeübt werden. Bei empfindlichen Gegenständen können so Oberflächenbeschädigungen und Verformungen vermieden werden. Darüber hinaus ermöglicht die Überwachung des zeitlichen Druckverlaufes eine Überwachung und Auswertung des Arbeitsprozesses. Beispielsweise kann aus den Charakteristika des Druckverlaufes ermittelt werden, ob bei einem Unterdruckgreifer als Aktor ein Gegenstand bestimmungsgemäß gegriffen ist, wie schwer dieser Gegenstand ist und/oder wie groß dieser Gegenstand ist.

Grundsätzlich können Aussagen über den Funktionszustand auch aus Messungen anderer fluidischer Kenngrößen ermittelt werden. Insofern ist grundsätzlich denkbar, dass ein in den Aktorraum einströmender und/oder aus dem Aktorraum ausströmender Volumenstrom gemessen wird. Auch aus solchen Messdaten lassen sich Funktionsdaten in Bezug auf die genannten Eigenschaften ermitteln.

Insbesondere ist vorteilhaft, wenn der Arbeitsprozess unter Wirkung einer Belastung durchgeführt wird, wie sie beim bestimmungsgemäßen Betreiben des Aktors auftritt. Insofern erfolgt die Messung während des eigentlichen Arbeitsprozesses des Aktors, beispielsweise während der Handhabung eines Gegenstandes oder während des Antreibens einer Vorrichtung mittels des Aktors. Insofern ist es nicht erforderlich, die bestimmungsgemäße Nutzung zur Überwachung des Funktionszustandes zu unterbrechen.

Um die zeitliche Veränderung des gemessenen Druckes zuverlässig überwachen zu können, kann nach einer vorteilhaften Ausgestaltung der von der Betriebsdruckversorgung bereitgestellte Volumenstrom an Arbeitsfluid an die Größe und/oder die mechanischen Eigenschaften des Aktorraumes angepasst werden. Hierzu kann vorgesehen sein, dass zwischen Betriebsdruckversorgung und Aktorraum ein Drosselventil, Strömungswiderstand, Strömungsblende o.ä. geschaltet ist. Dadurch kann der Volumenstrom verringert werden und die zeitliche Veränderung des Druckes verlangsamt werden. Dadurch kann verhindert werden, dass die zeitliche Änderung des Druckes zu schnell erfolgt und die Überwachung ungenau wird.

Gemäß der Erfindung wird eine dem Zeitverlauf des Druckes während des Arbeitsprozesses repräsentierende Kennlinie ermittelt und in einer Speichereinrichtung hinterlegt. Die aufgezeichnete Kennlinie ermöglicht verschiedenartige Rückschlüsse auf Einflussfaktoren und somit auf den Funktionszustand. Insbesondere wirken sich verschiedenartige Einflüsse auf unterschiedliche Bereiche der Kennlinie aus, beispielsweise bei unterschiedlichen Druckniveaus und/oder zu unterschiedlichen Zeiten. Im Verlauf der Kennlinie kann z.B. eine Änderung der Materialeigenschaften des Aktors (z.B. aufgrund von Alterungsprozessen und/oder Verschleißprozessen) von einer Belastung des Aktors (z.B. durch die Gewichtskraft eines Gegenstandes) unterschieden werden. Dies gilt insbesondere für Aktoren mit einem Aktorraum, der von flexiblen Wandungen (zumindest teilweise) begrenzt ist. Da sich die mechanischen Eigenschaften der Wandungen mit dem Verformungszustand verändern, ist der zeitliche Druckverlauf am Anfang des Arbeitsprozesses in charakteristischer Weise verschieden von dem zeitlichen Druckverlauf am Ende des Arbeitsprozesses. Verschiedene Funktionszustände führen daher zu gut unterscheidbaren Kennlinien.

Ein erfindungsgemäßes Verfahren wird dadurch ermöglicht, dass nicht eine kontinuierliche Kennlinie ermittelt, sondern der in definierten Zeitabständen vom Beginn des Arbeitsprozesses angemessene Druck mit diskreten, in einer Speichereinrichtung hinterlegten Referenzwerten verglichen wird und/oder die Abweichung von den hinterlegten Referenzwerten ermittelt wird.

Erfindungsgemäß wird zwar eine kontinuierliche Kennlinie ermittelt und aufgezeichnet, jedoch nur eine definierte Anzahl von Punkten der Kennlinie mit einer entsprechenden Anzahl von Referenzwerten für diskrete Referenzzeitpunkte (gemessen ab Beginn des Arbeitsprozesses) verglichen und/oder die Abweichung von den Referenzwerten ermittelt. Eine Überwachung der Kennlinie an diskreten, definierten Punkten kann ausreichend sein, da verschiedene Einflüsse (Materialalterung, Belastung, Verformung o.Ä.) typischerweise charakteristische Bereiche der Kennlinie beeinflussen.

Eine präzise Überwachung wird dadurch ermöglicht, dass die ermittelte Kennlinie mit einer in einer Speichereinrichtung hinterlegten Referenzkennlinie verglichen wird, und/oder die Abweichung von der Referenzkennlinie ermittelt wird. Aus den Abweichungen von der Referenzkennlinie können verschiedenartige Funktionszustände ermittelt werden, wie nachfolgend noch weiter erläutert.

In vorteilhafter Weise kann das Verfahren weiter ausgestaltet werden zu einem Betriebsverfahren für den Aktor. Hierzu kann insbesondere vorgesehen sein, dass die Betriebsdruckversorgung derart geregelt wird, und/oder die Beaufschlagung des Aktorraums mit Druck derart geregelt wird (z.B. mittels einer vorgeschalteten Ventileinrichtung), dass der den Aktorraum beaufschlagende Druck in fest definierten Zeitabständen (gemessen vom Beginn des Arbeitsprozesses an) einem jeweils vorgegebenen Sollwert entspricht. Denkbar ist auch, dass derart geregelt wird, dass die Abweichung von dem jeweils vorgegebenen Soll-Wert maximal eine Toleranzabweichung beträgt.

Insbesondere kann eine Regelung auch derart erfolgen, dass der gemessene Druck (und/oder die ermittelte Kennlinie) im Wesentlichen einer gewünschten Soll-Kennlinie folgt. Insbesondere kann auch derart geregelt werden, dass die den Druck repräsentierende, gemessene Kennlinie während des Arbeitsprozesses innerhalb eines Toleranzkorridors von der Soll-Kennlinie verläuft.

Um vergleichbare Daten zu gewinnen, ist vorzugsweise vorgesehen, dass zur Betätigung des Aktors bei Durchführung des Arbeitsprozesses die Betriebsdruckversorgung eine vorab definierte Leistung und/oder einen vorab definierten Volumenstrom an Arbeitsfluid bereitstellt. Dadurch wird eine reproduzierbare Betriebsdruckversorgung bereitgestellt und es werden vergleichbare Messungen sichergestellt.

Zur weiteren Ausgestaltung kann in einem Kalibrierprozess eine Referenzkennlinie ermittelt werden. Der Kalibrierprozess wird zusätzlich zu dem Arbeitsprozess durchgeführt, insbesondere nach einer definierten Anzahl von durchgeführten Arbeitsprozessen, oder unmittelbar bei erstmaliger Inbetriebnahme des Aktors in einer übergeordneten Anlage. Bei dem Kalibrierprozess ist insbesondere vorgesehen, dass der Aktor mit einer definierten und reproduzierbaren Belastung beaufschlagt ist, beispielsweise unter der Wirkung einer definierten und reproduzierbaren Kraft. Dies kann ein Neutralzustand sein, z.B. bei einem überdruckangetriebenen Antrieb als Aktor ein Leerlaufzustand ohne Belastung. Bei dem Kalibrierprozess ist insbesondere auch vorgesehen, dass die Betriebsdruckversorgung eine definierte Leistung und/oder einen definierten Volumenstrom an Arbeitsfluid bereitstellt. Ähnlich wie bei dem Arbeitsprozess ist der Kalibrierprozess dadurch ausgezeichnet, dass der Aktor von der Anfangskonfiguration zu der Endkonfiguration übergeht. Während des Übergangs wird die Zeitabhängigkeit des den Aktorraum beaufschlagenden Druckes in Form einer den zeitlichen Druckverlauf repräsentierenden Referenzkennlinie ermittelt und in einer Speichereinrichtung hinterlegt.

Erfindungsgemäß werden aus dem in Abhängigkeit der Zeit gemessenen Druck jeweils Funktionsdaten ermittelt. Dies erfolgt in einer Steuereinrichtung. Die Funktionsdaten repräsentieren den Funktionszustand des Aktors. Die eingangs genannten Informationen werden aus dem Verlauf einer Kennlinie und/oder der Größe von Abweichungen einer gemessenen Kennlinie von einer Referenzkennlinie als Funktionsdaten ermittelt.

Insbesondere ist es vorteilhaft, aus der Zeitabhängigkeit des gemessenen Druckes eine Belastung durch eine auf den Aktor wirkende Kraft zu ermitteln. Handelt es sich beispielsweise um einen Hebeaktor (z.B. Schlauchheber), kann das Gewicht (bzw. die Gewichtskraft) eines gehandhabten Gegenstandes ermittelt werden.

Zur weiteren Ausgestaltung des Verfahrens ist vorgesehen, dass eine Vielzahl von Arbeitsprozessen aufeinanderfolgend durchgeführt wird. Die Arbeitsprozesse sind insbesondere sich zyklisch wiederholend ausgebildet, d.h. der Aktor wird nach Erreichen der Endkonfiguration wieder in die Anfangskonfiguration überführt. Es kann z.B. eine Mittelung von ermittelten Kennlinien erfolgen. Denkbar ist auch, nach definierten Zeitpunkten und/oder nach einer definierten Zahl von Arbeitsprozessen einen Kalibrierprozess durchzuführen, wie oben erläutert.

Die eingangs gestellte Aufgabe wird auch durch einen druckangetriebenen (bzw. druckantreibbaren, d.h. mittels Druck antreibbaren) Aktor gelöst. Der Aktor ist derart ausgebildet, dass er durch Beaufschlagung eines Aktorraums mit Druck (Überdruck oder Unterdruck) betreibbar ist, wobei der Aktor durch die Beaufschlagung mit Druck von einer Anfangskonfiguration in die Endkonfiguration übergeht (Arbeitsprozess). Der Aktorraum ist von einer flexibel verformbaren Wandung begrenzt. Insbesondere ist die Wandung elastisch verformbar. Beim Übergang von der Anfangskonfiguration zu der Endkonfiguration verformt sich die Wandung. Entsprechend dem vorstehend erläuterten Verfahren ist eine Sensoreinrichtung vorgesehen, welche dazu ausgebildet ist, einen den Aktorraum beaufschlagenden Druck zeitabhängig zu messen. Die Sensoreinrichtung kann insbesondere ein Drucksensor in dem Aktorraum oder in einem Zugang zu dem Aktorraum sein.

Zur weiteren Ausgestaltung des Aktors kann eine mit der Sensoreinrichtung zusammenwirkende Steuereinrichtung vorgesehen sein, welche dazu ausgebildet und/oder programmiert ist, ein Verfahren zur Überwachung von Funktionszuständen des Aktors durchzuführen, wie vorstehend erläutert. Die Steuereinrichtung kann beispielsweise in einem Microcontroller des Sensors integriert sein. Insbesondere kann in der Steuereinrichtung ein Computerprogramm hinterlegt sein, welches die Steuereinrichtung zur Ausführung des vorstehend beschriebenen Verfahrens ansteuert.

Die Steuereinrichtung kann auch dazu ausgebildet sein, die Betriebsdruckversorgung des Aktors in Abhängigkeit des gemessenen Drucks anzusteuern. Wie erläutert, kann insbesondere eine Regelung der Betriebsdruckversorgung derart erfolgen, dass eine gemessene Kennlinie innerhalb eines gewünschten Toleranzkorridors von einer Soll-Kennlinie gehalten wird.

Bei dem druckangetriebenen Aktor kann es sich, wie eingangs erläutert, grundsätzlich um sämtliche Arten von Aktoren handeln, welche durch Druckbeaufschlagung eines Aktorraums betreibbar sind. Beispielsweise kann der Aktor als Überdruck-angetriebener oder als Unterdruck-angetriebener Aktor ausgestaltet sein.

Ein vorteilhaftes Anwendungsgebiet sind insbesondere Aktoren, welche als Unterdruckgreifvorrichtung ausgebildet sind, bei welchen ein Saugraum den genannten Aktorraum bildet. Der Saugraum ist zum Greifen eines Gegenstandes mit Unterdruck beaufschlagbar. Insbesondere weist die Unterdruckgreifvorrichtung eine Anlagefläche mit einer Saugöffnung auf, welche mit dem Saugraum kommuniziert. Die Anlagefläche mit der Saugöffnung wird zum Greifen des Gegenstandes an diesen angelegt.

Ein weiteres vorteilhaftes Anwendungsgebiet besteht darin, dass der Aktor als Schlauchheber ausgebildet ist. Ein Schlauchheber umfasst einen Hebeschlauch mit einem Schlauchinnenraum, welcher den Aktorraum bildet. Der Hebeschlauch ist als flexibel verformbare Wandung derart ausgebildet, dass durch einen den Schlauchinnenraum beaufschlagenden Unterdruck der Hebeschlauch verkürzt wird, d.h. von einer ausgestreckten Anfangskonfiguration in eine zusammengezogene Endkonfiguration überführbar ist. Bei derartigen Schlauchhebern kann aus der Kennlinie in vorteilhafter Weise das Gewicht eines mit dem Schlauchheber gehobenen Gegenstandes ermittelt werden.

Ein besonders vorteilhaftes Anwendungsgebiet sind sogenannte fluidische Elastomerktoren. Diese weisen flexible Wandungen aus einem Elastomer auf, welche den Aktorraum umschließen. Der Aktorraum weist insbesondere einen Zugang zur Zufuhr und Abfuhr von Arbeitsfluid auf. Vorzugsweise ist der Aktor Raum im Übrigen durch die Wandung aus Elastomer gegenüber der Umgebung abgeschlossen. Mit dem fluidischen Elastomeraktor kann durch den druckinduzierten Übergang von der Anfangskonfiguration zu der Endkonfiguration zum Beispiel ein Gegenstand manipuliert werden.

Die Erfindung wird im Folgenden anhand der Figuren näher erläutert. Es zeigen:
Figur 1: Skizzierte Darstellung eines erfindungsgemäßen Aktors zur Durchführung eines erfindungsgemäßen Verfahrens;
Figur 2: Beispielhafte Darstellung von Kennlinien für verschiedene Betriebsbedingungen des Aktors;
Figur 3: Beispielhafte Darstellung zur Erläuterung des Vergleichs mit Referenzwerten zu definierten Referenzzeitpunkten;
Figur 4: Beispielhafte Darstellung zur Erläuterung weiterer Einflussfaktoren auf die Kennlinien;
Figur 5: Eine weitere Ausführungsform eines erfindungsgemäßen Aktors in seiner Anfangskonfiguration;
Figur 6: Der Aktor gemäß Figur 5 in seiner Endkonfiguration.

In der nachfolgenden Beschreibung sowie in den Figuren sind für identische oder einander entsprechende Merkmale jeweils dieselben Bezugszeichen verwendet.

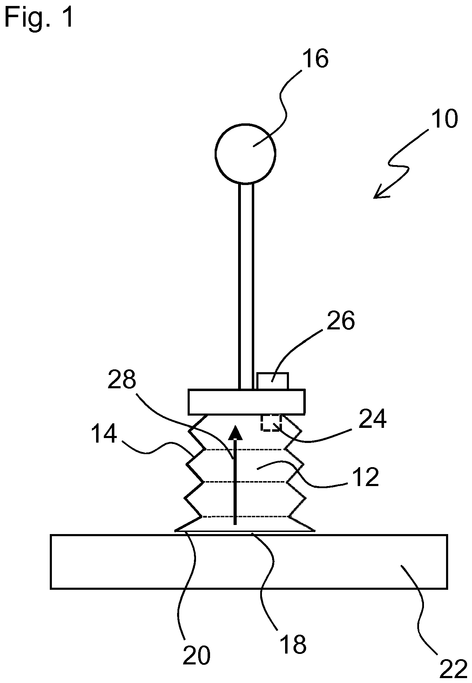

Die Figur 1 zeigt eine skizzierte Darstellung eines druckangetriebenen Aktors 10. Lediglich beispielhaft ist der Aktor 10 als Unterdruckgreifer ausgebildet. Der Aktor weist einen Aktorraum 12 auf, welcher von einer flexibel verformbaren Wandung 14 begrenzt ist. Im dargestellten Beispiel ist die flexibel verformbare Wandung als flexibel verformbare Faltenbalg 14 ausgebildet.

Zur Beaufschlagung des Aktorraums 12 mit Druck steht der Aktorraum 12 mit einer Betriebsdruckversorgung 16 in Druckverbindung und/oder Strömungsverbindung.

Der in Figur 1 als Unterdruckgreifvorrichtung ausgebildete Aktor 10 weist eine Anlagefläche 18 mit einer Saugöffnung 20 auf, welche mit dem Aktorraum 12 kommuniziert. Zum Greifen eines Gegenstandes 22 wird die Anlagefläche 18 mit der Saugöffnung an den Gegenstand 22 angelegt und der Aktorraum 12 mit Unterdruck beaufschlagt.

Es können jedoch grundsätzlich auch Aktoren mit anderen Arten von Aktorräumen 12 Verwendung finden, beispielsweise ein Hebeschlauch als Aktor, wobei der Aktorraum 12 von einer Hebeschlauchwandung (z.B. entsprechend Wandung 14) umgeben ist. Ebenso kann der Aktor 10 als fluidischer Elastomeraktor ausgebildet sein, der durch Beaufschlagung mit Druck seine Form ändert.

Zum Betreiben des Aktors 10 wird der Aktorraum 12 mit Druck beaufschlagt. Wenn es sich, wie wie in Figur 1, um einen unterdruckbetriebenen Aktor handelt, so wird der Aktorraum 12 mit einem Unterdruck gegenüber der Umgebung beaufschlagt.

Der Aktor 10 weist eine Sensoreinrichtung 24 (hier: Drucksensor) auf, welche zur Messung des den Aktorraum 12 beaufschlagenden Drucks ausgebildet ist. Der Aktor 10 kann ferner eine Steuereinrichtung 26 aufweisen (siehe Figur 1), welche mit der Sensoreinrichtung 24 zusammenwirkt, so dass der den Aktorraum 12 beaufschlagende Druck zeitabhängig gemessen werden kann. Insbesondere kann der Aktor 10 eine Speichereinrichtung umfassen, beispielsweise als Bestandteil der Steuereinrichtung. In der Speichereinrichtung können gemessene Daten hinterlegt werden.

Der Funktionszustand des Aktors 10 kann während der Durchführung eines Arbeitsprozesses überwacht werden. Zur Durchführung des Arbeitsprozesses wird der Aktorraum 12 von der Betriebsdruckversorgung 16 mit Druck (im dargestellten Beispiel durch Unterdruck) beaufschlagt. Dies führt dazu, dass der Aktor von einer Anfangskonfiguration zu einer Endkonfiguration übergeht. Im Beispiel der Figur 1 ist die Anfangskonfiguration eine ausgestreckte Konfiguration der flexibel verformbaren Wandung 14, wie in Figur 1 dargestellt. Bei Evakuierung des Aktorraumes 12 ändert sich die Konfiguration des Aktors 10 (genauer: der Wandung 14 bzw. des Faltenbalges 14 in Fig. 1) durch Kompression entlang der Kompressionsrichtung 28. Die Endkonfiguration ist erreicht, wenn der Faltenbalg 14 entsprechend seiner Materialeigenschaften und geometrischen Eigenschaften vollständig zusammengezogen ist. Insofern ist der Übergang von der Anfangskonfiguration zu der Endkonfiguration an eine Verformung der flexiblen Wandung 14 gekoppelt.

Mittels der Sensoreinrichtung 24 kann der der den Aktorraum 12 beaufschlagende Druck oder der in dem Aktorraum 12 herrschende Druck in Abhängigkeit der Zeit von Beginn des Arbeitsprozesses gemessen werden, d.h. vom Beginn des Übergangs von der Anfangskonfiguration zu der Endkonfiguration an gemessen. Der zeitliche Druckverlauf kann in Form einer die Abhängigkeit des Drucks von der Zeit repräsentierenden Kennlinie aufgenommen werden und beispielsweise in der Steuereinrichtung 26 bzw. einer Speichereinrichtung hinterlegt werden.

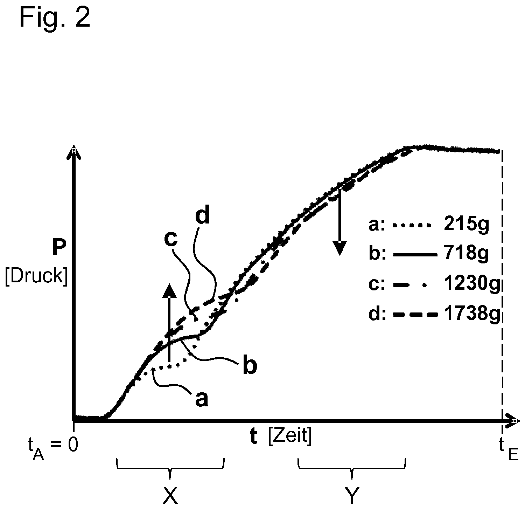

Die Figuren 2 bis 4 zeigen verschiedene Kennlinien und die Einflüsse verschiedener Betriebszustände des Aktors 10 auf die Kennlinien.

Beispielsweise zeigt die Figur 2 Kennlinien des den Aktorraum 12 beaufschlagenden Druckes für verschiedene Arbeitsprozesse. Jeder Arbeitsprozess beginnt dabei zum Zeitpunkt tA = 0 und endet zum Zeitpunkt tE.

Beispielsweise kann die Betriebsdruckversorgung 16 derart angesteuert werden, dass sie über den gesamten Arbeitsprozess eine konstante Leistung bereitstellt. Der Zeitpunkt tE markiert dabei das Ende des Arbeitsprozesses, definiert durch Erreichen der Endkonfiguration des Aktors.

Die verschiedenen Arbeitsprozesse, welchen in der Figur 2 die verschiedenen Kennlinien zugeordnet sind, unterscheiden sich dabei beispielhaft durch die Masse des mit dem Aktor 10 gegriffenen Gegenstandes 22. Verschiedene Massen des Gegenstandes 22 führen zu verschiedenen Belastungszuständen für den Aktor 10. Im dargestellten Beispiel der Figur 1 entsprechen verschiedene Belastungszustände verschiedenen Gewichtskräften, welche aufgrund des angesaugten Gegenstandes 22 einem Übergang des Aktorraumes 12 von der Anfangskonfiguration in die Endkonfiguration entgegenwirken.

Wie in der Figur 2 ersichtlich, existieren Abschnitte X und Y des Arbeitsprozesses (und somit verschiedene Bereiche der Kennlinienverläufe), in welchen die Kennlinien für verschiedene Belastungszustände (hier: Massen des Gegenstandes 22) in charakteristischer Weise voneinander abweichen. Beispielhaft sind Kennlinien a, b, c, d für die verschiedenen Massen eingezeichnet.

Dies ermöglicht es, durch Analyse des Verlaufs einer aufgezeichneten Kennlinie zu ermitteln, welchem Belastungszustand der Aktor 10 ausgesetzt ist. Durch Messung der Kennlinie kann hier also ein Funktionszustand, z.B. die Masse des gegriffenen Gegenstandes, ermittelt werden.

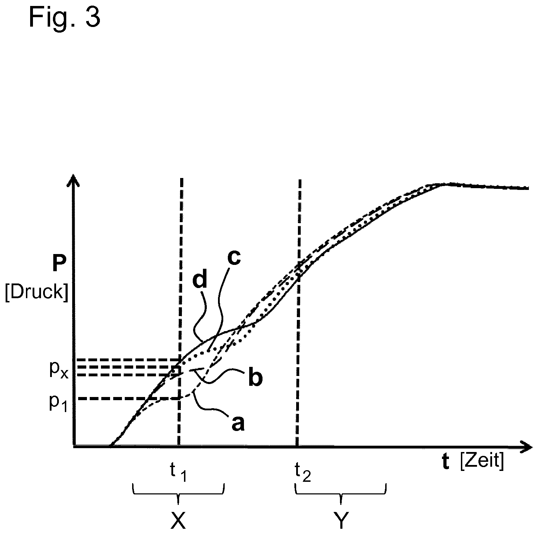

Da die Kennlinien für verschiedene Belastungszustände in den charakteristischen Abschnitten X und Y voneinander abweichen, ist es ausreichend, die verschiedenen Kennlinien nicht über den gesamten Arbeitsprozess, sondern nur zu festgelegten und diskreten Referenzzeitpunkten t1 und t2 auszuwerten. Dies ist in der Figur 3 veranschaulicht. Aus den Werten der Kennlinien zu den Zeitpunkten t1 und t2 kann aufgrund des charakteristischen Verlaufes in den Abschnitten X und Y ebenfalls der interessierende Funktionszustand (hier: Masse des Gegenstandes 22) ermittelt werden. Im Beispiel der Figuren 2 und 3 bedeutet dies, dass die Kennlinien a, b, c, d (siehe Figur 2) bereits durch die charakteristischen Werte zu den Referenzzeitpunkten t1 und t2 unterschieden werden können.

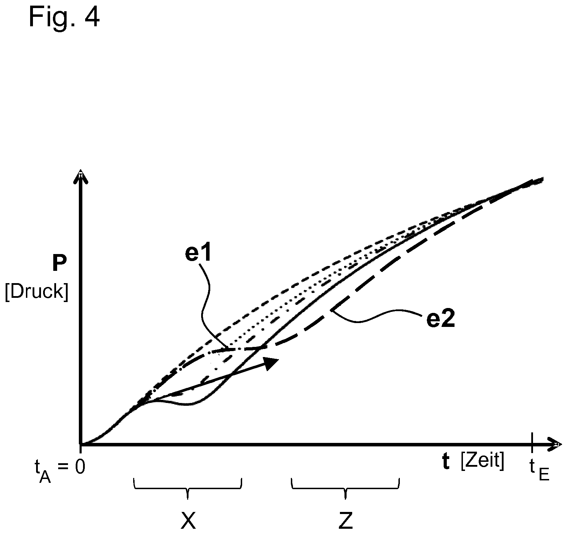

Durch Messung des den Aktorraum 12 beaufschlagenden Drucks in Abhängigkeit der Zeit können verschiedenartige Informationen über den Funktionszustand des Aktors 10 ermittelt werden. Hierzu kann ausgenutzt werden, dass verschiedene Einflussfaktoren oftmals verschiedene charakteristische Bereiche der Kennlinien beeinflussen. Dies ist in der Figur 4 veranschaulicht. Gezeigt sind wiederum eine Reihe verschiedener Kennlinien für unterschiedliche Belastungszustände des Aktors durch unterschiedliche Gewichtskräfte. Wie am Beispiel der Figur 2 erläutert, weichen die Kennlinien in einem Abschnitt X der Arbeitsprozesse in Abhängigkeit der Belastung durch Gewichte in charakteristischer Weise voneinander ab.

In der Figur 4 entsprechen die beiden mit e1 und e2 bezeichneten Kennlinien einem Belastungszustand mit identischem Gewicht bzw. mit identischer Masse. Insofern stimmen die Kennlinien e1 und e2 in dem genannten Bereich X im Wesentlichen überein.

Im Falle der Figur 4 sind die Kennlinien e1 und e2 jedoch in zwei Funktionszuständen des Aktors 10 aufgenommen, welche sich im Grad der Verformbarkeit des Aktorraumes 12 unterscheiden. Der Grad der Verformbarkeit wird beispielsweise durch die Konfiguration der flexibel verformbaren Wandung 14 beeinflusst. Handelt es sich z.B. um einen Faltenbalg 14, so kann eine Kompression unter Verformung erfolgen bis zu einem Kompressionszustand des Materials, bei dem die einzelnen Falten aneinander anliegen. Ebenso kann eine Materialermüdung oder ein Materialverschleiß zu einer Änderung der mechanischen Eigenschaften und somit zu einem veränderten Verformungsverhalten führen. Wie in der Figur 4 ersichtlich, unterscheiden sich die Kennlinien e1 und e2 in einem charakteristischen Abschnitt Z des Arbeitsprozesses, der von dem Abschnitt X abweicht.

Insgesamt kann durch Analyse der Kennlinien sowohl im Abschnitt X, als auch im Abschnitt Z Information über den Belastungszustand des Aktors und gleichzeitig auch Information über den Grad der Verformbarkeit bzw. über eine evtl. Materialermüdung ermittelt werden.

Die Kennlinien können beispielsweise als Datensatz in der Steuereinrichtung 26 abgelegt und ausgewertet werden. Wie eingangs erläutert, kann die Auswertung beispielsweise einen Vergleich mit einer Referenzkennlinie umfassen. Aus den Kennlinien bzw. den Werten der Kennlinie zu definierten Referenzzeitpunkten können dann Funktionsdaten ermittelt werden, welche den Funktionszustand des Aktors charakterisieren. Hierzu kann die Steuereinrichtung 26 eine entsprechend ausgestaltete Auswerteeinheit mit Prozessor aufweisen.

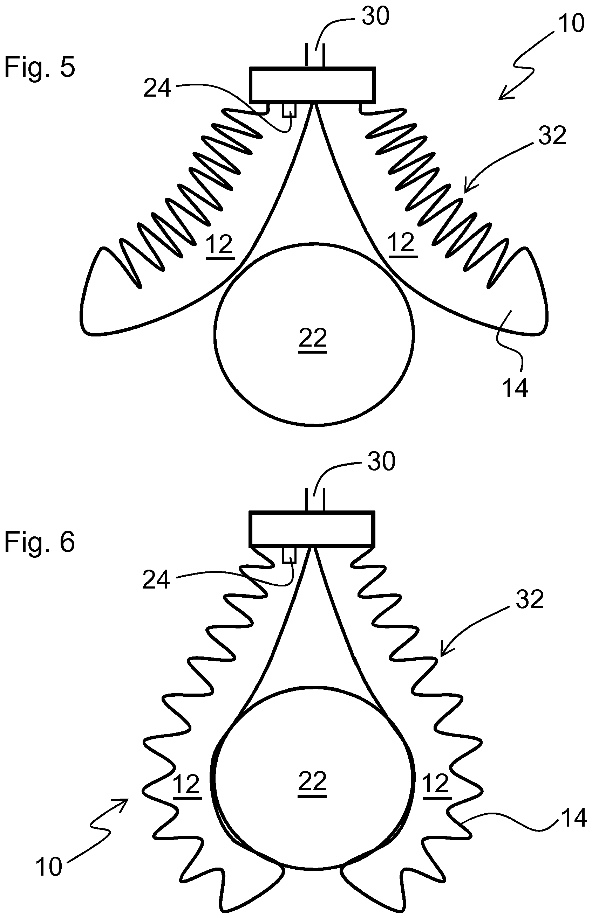

Die Figuren 5 und 6 zeigen ein weiteres, vorteilhaftes Anwendungsgebiet. Hierbei ist der Aktor 10 als fluidischer Elastomeraktor ausgebildet. Dieser weist einen Aktorraum 12 auf, welcher von einer Wandung 14 umgeben ist, die aus einem Elastomer gebildet ist. Der Aktorraum 12 kann durch einen Zugang 30 mit Arbeitsfluid beaufschlagt werden. Im dargestellten Beispiel umfasst der Aktor zwei fingerartige Abschnitte, die vorzugsweise jeweils gegenüber der Umgebung vollständig durch die Wandung 14 umschlossen sind (abgesehen von dem Zugang 30). Ein definierter und/oder begrenzter Bereich 32 der Wandung 14 kann faltenartig ausgebildet sein (vgl. Figur 5).

In der Figur 5 ist der Aktor 10 in seiner Anfangskonfiguration dargestellt. Bei Beaufschlagung des Aktorraums 12 mit Druck dehnt sich die flexibel verformbaren Wandung 14 des Aktors 10 aus. Dies führt zu einer Formänderung des Aktors 10. Ist z.B. ein definierter Bereich 32 der Wandung 14 faltenartig ausgebildet, so dehnt sich bei Druckbeaufschlagung der faltenartig ausgebildete Bereich 32 stärker aus, als übrige Bereiche der flexibel verformbaren Wandung 14. In der Folge nimmt der fluidische Elastomer Aktor 10 eine in der Figur 6 dargestellte Endkonfiguration ein. Die Endkonfiguration unterscheidet sich von der Anfangskonfiguration hinsichtlich ihrer Gesamtgeometrie. Dies kann dazu ausgenutzt werden, einen Gegenstand 22 zugreifen. Im dargestellten Beispiel umschließen die fingerartigen Abschnitte des Aktors 10 bei Vorliegen der Entkonfiguration den Gegenstand 22 (vergleiche Figur 6).

## Patentansprüche

1. Verfahren zur Überwachung eines Funktionszustandes eines druckangetriebenen Aktors (10), welcher einen zumindest abschnittsweise von einer flexibel verformbaren Wandung (14) begrenzten Aktorraum (12) aufweist, wobei der Aktor (10) durch Beaufschlagung des Aktorraumes (12) mit Druck durch eine Betriebsdruckversorgung (16) betätigt wird,
wobei zur Betätigung des Aktors ein Arbeitsprozess durchgeführt wird, welcher mit einem Übergang des Aktors (10) von einer Anfangskonfiguration zu einer Endkonfiguration einhergeht,
wobei mittels einer Sensoreinrichtung (24) zur Messung des den Aktorraum (12) beaufschlagenden Druckes während des Überganges von Anfangskonfiguration zur Endkonfiguration der Druck in Abhängigkeit der Zeit gemessen wird,
wobei eine den Zeitverlauf des Drucks während des Arbeitsprozesses repräsentierende Kennlinie (a, b, c, d) ermittelt wird und in einer Speichereinrichtung (26) hinterlegt wird,
**dadurch gekennzeichnet, dass** die ermittelte Kennlinie mit einer in einer Speichereinrichtung (26) hinterlegten Referenzkennlinie verglichen wird und/oder die Abweichung von der Referenzkennlinie ermittelt wird,
und dass aus dem Verlauf der Kennlinie und/oder aus der Größe von Abweichungen von der Referenzkennlinie solche Funktionsdaten ermittelt werden, welche einen Funktionszustand des Aktors (10) repräsentieren, wobei aus unterschiedlichen Bereichen der Kennlinie verschiedene Funktionsdaten betreffend unterschiedliche Funktionszustände ermittelt werden, wobei der Druck kontinuierlich gemessen wird und die Kennlinie mit einer definierten und begrenzten Anzahl von Referenzwerten des Druckes für festgelegte und diskrete Referenzzeitpunkte (t_{1;}t₂) verglichen wird und/oder die Abweichung von den Referenzwerten ermittelt wird.

2. Verfahren zur Überwachung eines Funktionszustandes eines druckangetriebenen Aktors (10), welcher einen zumindest abschnittsweise von einer flexibel verformbaren Wandung (14) begrenzten Aktorraum (12) aufweist, wobei der Aktor (10) durch Beaufschlagung des Aktorraumes (12) mit Druck durch eine Betriebsdruckversorgung (16) betätigt wird,
wobei zur Betätigung des Aktors ein Arbeitsprozess durchgeführt wird, welcher mit einem Übergang des Aktors (10) von einer Anfangskonfiguration zu einer Endkonfiguration einhergeht,
wobei mittels einer Sensoreinrichtung (24) zur Messung des den Aktorraum (12) beaufschlagenden Druckes während des Überganges von Anfangskonfiguration zur Endkonfiguration der Druck in Abhängigkeit der Zeit gemessen wird,
wobei eine den Zeitverlauf des Drucks während des Arbeitsprozesses repräsentierende Kennlinie (a, b, c, d) ermittelt wird und in einer Speichereinrichtung (26) hinterlegt wird, **dadurch gekennzeichnet, dass** die ermittelte Kennlinie mit einer in einer Speichereinrichtung (26) hinterlegten Referenzkennlinie verglichen wird und/oder die Abweichung von der Referenzkennlinie ermittelt wird, und dass aus dem Verlauf der Kennlinie und/oder aus der Größe von Abweichungen von der Referenzkennlinie solche Funktionsdaten ermittelt werden, welche einen Funktionszustand des Aktors (10) repräsentieren, wobei aus unterschiedlichen Bereichen der Kennlinie verschiedene Funktionsdaten betreffend unterschiedliche Funktionszustände ermittelt werden, wobei der Druck nur in definierten Zeitabständen (t_{1;}t₂) vom Beginn des Arbeitsprozesses gemessen wird und die Kennlinie mit einer definierten und begrenzten Anzahl von Referenzwerten des Druckes für festgelegte und diskrete Referenzzeitpunkte (t_{1;}t₂) verglichen wird und/oder die Abweichung von den Referenzwerten ermittelt wird.

3. Verfahren nach Anspruch 1 oder 2, **dadurch gekennzeichnet, dass** aus den Funktionsdaten das Gewicht eines angesaugten Gegenstandes ermittelt, der Verschleißzustand des Aktors, der aktuelle Kompressionszustand des Aktorraumes und/oder der aktuelle Verformungszustand des Aktorraumes ermittelt wird.

4. Verfahren nach einem der vorherigen Ansprüche, **dadurch gekennzeichnet, dass** die Betriebsdruckversorgung (16) derart geregelt wird und/oder die Beaufschlagung des Aktorraums (12) mit Druck derart geregelt wird, dass der den Aktorraum (12) beaufschlagende Druck in definierten Zeitabständen vom Beginn des Arbeitsprozesses einem jeweils vorgegebenen Sollwert entspricht oder dass die Abweichung von dem jeweils vorgegebenen Sollwert maximal eine vorgegebene Toleranzabweichung beträgt.

5. Verfahren nach einem der Ansprüche 1 - 3, **dadurch gekennzeichnet, dass** zur Betätigung des Aktors (10) zur Durchführung des Arbeitsprozesses die Betriebsdruckversorgung (16) eine definierte Leistung und/oder einen definierten Volumenstrom an Arbeitsfluid bereitstellt.

6. Verfahren nach einem der vorherigen Ansprüche, **dadurch gekennzeichnet, dass** zusätzlich zu dem Arbeitsprozess ein Kalibrierprozess durchgeführt wird, bei welchem der Aktor mit einer definierten und reproduzierbaren Belastung beaufschlagt ist und die Betriebsdruckversorgung (16) eine definierte Leistung und/oder einen definierten Volumenstrom an Arbeitsfluid bereitstellt, wobei der Aktors (10) von der Anfangskonfiguration zu der Endkonfiguration übergeht und wobei die Zeitabhängigkeit des Druckes in Form einer den zeitlichen Druckverlauf repräsentierende Referenzkennlinie ermittelt wird und in einer Speichereinrichtung (26) hinterlegt wird.

7. Verfahren nach einem der vorherigen Ansprüche, **dadurch gekennzeichnet, dass** aus dem zeitlichen Verlauf des gemessenen Druckes eine als Belastung auf den Aktor (10) wirkende Kraft ermittelt wird.

8. Verfahren nach einem der vorherigen Ansprüche, **dadurch gekennzeichnet, dass** eine Vielzahl von Arbeitsprozessen zyklisch wiederholt und aufeinander folgend durchgeführt werden.

9. Druckangetriebener Aktor (10), welcher einen Aktorraum (12) aufweist, der zumindest abschnittsweise von einer flexibel verformbaren Wandung (14) derart begrenzt ist, dass der Aktor (10) durch Beaufschlagung des Aktorraumes (12) mit Druck betätigbar ist, wobei der Aktor (10) unter Verformung der flexibel verformbaren Wandung (14) von einer Anfangskonfiguration in eine Endkonfiguration übergeht, wobei eine Sensoreinrichtung (24) zur zeitabhängigen Messung des den Aktorraum (12) beaufschlagenden Druckes vorgesehen ist, **dadurch gekennzeichnet, dass** eine Steuereinrichtung (26) vorgesehen ist, welche dazu ausgebildet ist, ein Verfahren gemäß einem der Ansprüche 1 - 8 auszuführen.

10. Druckangetriebener Aktor (10) nach Anspruch 9, wobei der Aktor (10) eine Unterdruckgreifvorrichtung mit einem den Aktorraum bildenden Saugraum (12) ist, welcher zum Greifen eines Gegenstandes (22) mit Unterdruck beaufschlagbar ist.

11. Druckangetriebener Aktor nach Anspruch 9, wobei der Aktor ein Schlauchheber mit einem den Aktorraum bildenden Schlauchinnenraum eines Hebeschlauches ist, wobei der Hebeschlauch durch einen den Schlauchinnenraum beaufschlagenden Unterdruck von einer ausgestreckten Anfangskonfiguration in eine zusammengezogene Endkonfiguration überführbar ist.

## Claims

1. Method for monitoring a functional state of a pressure-driven actuator (10) which comprises an actuator compartment (12) defined at least in portions by a flexibly deformable wall (14), the actuator (10) being actuated by applying pressure to the actuator compartment (12) by means of an operating pressure supply (16),
a work process being carried out to actuate the actuator, which process is accompanied by the actuator (10) transitioning from a starting configuration to an end configuration,
the pressure being measured depending on time by means of a sensor apparatus (24) for measuring the pressure applied to the actuator compartment (12) during the transition from the starting configuration to the end configuration,
a characteristic curve (a, b, c, d) representing the progression of the pressure over time during the work process being determined and being stored in a storage apparatus (26),
**characterised in that** the determined characteristic curve is compared with a reference characteristic curve stored in a storage apparatus (26), and/or the deviation from the reference characteristic curve is determined,
and **in that** functional data which represent a functional state of the actuator (10) are determined from the progression of the characteristic curve and/or the magnitude of deviations from the reference characteristic curve, wherein from different regions of the characteristic curve different functional data relating to different functional states are determined, wherein the pressure is continuously measured and the characteristic curve is compared with a specified and limited number of pressure reference values for set and distinct reference times (t_{1;}t₂), and/or the deviation from the reference values is determined.

2. Method for monitoring a functional state of a pressure-driven actuator (10) which comprises an actuator compartment (12) defined at least in portions by a flexibly deformable wall (14), the actuator (10) being actuated by applying pressure to the actuator compartment (12) by means of an operating pressure supply (16),
a work process being carried out to actuate the actuator, which process is accompanied by the actuator (10) transitioning from a starting configuration to an end configuration,
the pressure being measured depending on time by means of a sensor apparatus (24) for measuring the pressure applied to the actuator compartment (12) during the transition from the starting configuration to the end configuration,
a characteristic curve (a, b, c, d) representing the progression of the pressure over time during the work process being determined and being stored in a storage apparatus (26), **characterised in that** the determined characteristic curve is compared with a reference characteristic curve stored in a storage apparatus (26), and/or the deviation from the reference characteristic curve is determined,
and **in that** functional data which represent a functional state of the actuator (10) are determined from the progression of the characteristic curve and/or the magnitude of deviations from the reference characteristic curve, wherein from different regions of the characteristic curve different functional data relating to different functional states are determined, wherein the pressure is only measured at specified time intervals (t_{1;}t₂) from the start of the work process and the characteristic curve is compared with a specified and limited number of pressure reference values for set and distinct reference times (t_{1;}t₂), and/or the deviation from the reference values is determined.

3. Method according to either claim 1 or claim 2, **characterised in that** from the functional data the weight of an object being sucked in, the wear state of the actor, the current compression state of the actor compartment and/or the current deformation state of the actuator compartment is determined.

4. Method according to any of the preceding claims, **characterised in that** the operating pressure supply (16) is controlled and/or the application of pressure to the actuator compartment (12) is controlled such that the pressure applied to the actuator compartment (12) corresponds to a target value predefined in each case at specified time intervals from the start of the work process, or **in that** the deviation from the target value predefined in each case is at most a predefined tolerance deviation.

5. Method according to any of claims 1-3, **characterised in that** the operating pressure supply (16) provides a specified output and/or a specified volumetric flow of working fluid in order to actuate the actuator (10) to carry out the work process.

6. Method according to any of the preceding claims, **characterised in that**, in addition to the work process, a calibration process is carried out in which a specified and reproducible load is applied to the actuator and the operating pressure supply (16) provides a specified output and/or a specified volumetric flow of working fluid, the actuator (10) transitioning from the starting configuration to the end configuration, and the time dependency of the pressure being determined in the form of a reference characteristic curve representing the progression of the pressure over time and being stored in a storage apparatus (26).

7. Method according to any of the preceding claims, **characterised in that** a force acting on the actuator (10) as a load is determined from the progression of the measured pressure over time.

8. Method according to any of the preceding claims, **characterised in that** a plurality of work processes are cyclically repeated and are carried out in succession.

9. Pressure-driven actuator (10) which comprises an actuator compartment (12) defined at least in portions by a flexibly deformable wall (14) such that the actuator (10) can be actuated by applying pressure to the actuator compartment (12), the actuator (10) transitioning from a starting configuration into an end configuration under deformation of the flexibly deformable wall (14), wherein a sensor apparatus (24) is provided for the time-dependent measurement of the pressure applied to the actuator compartment (12), **characterised in that** a controller (26) is provided which is designed to carry out a method according to any of claims 1-8.

10. Pressure-driven actuator (10) according to claim 9, wherein the actuator (10) is a vacuum pick-up device comprising a suction compartment (12) forming the actuator compartment, to which a vacuum can be applied in order to pick up an object (22).

11. Pressure-driven actuator according to claim 9, wherein the actuator is a vacuum tube lifter comprising a tube interior of a vacuum lifting tube forming the actuator compartment, wherein the vacuum lifting tube can be transferred from an extended starting configuration into a contracted end configuration by means of a vacuum being applied to the tube interior.

## Revendications

1. Procédé de surveillance d'un état de fonctionnement d'un actionneur entraîné par pression (10) et qui a une chambre d'actionneur (12) délimitée par au moins un segment d'une paroi (14) flexible, déformable,
on active l'actionneur (10) par l'application d'une pression à la chambre d'actionneur (12) par une alimentation de pression de fonctionnement (16),
on effectue un processus de travail qui consiste à faire passer l'actionneur (10) d'une configuration initiale à une configuration finale pour activer l'actionneur,
on mesure la pression en fonction du temps, à l'aide d'une installation de capteur (24) pour mesurer la pression appliquée à la chambre d'actionneur (12) pendant la transition entre la configuration initiale et la configuration finale,
on détermine une courbe caractéristique (a, b, c, d) qui représente le chronogramme de la pression pendant le processus de travail et on l'enregistre dans une mémoire (26),
procédé **caractérisé en ce qu'**on compare la courbe caractéristique déterminée à une courbe caractéristique de référence, enregistrée dans la mémoire (26) et/ou on détermine l'écart par rapport à la courbe caractéristique de référence, et
à partir de la forme de la courbe caractéristique et/ou de l'importance des écarts par rapport à la courbe caractéristique de référence, on détermine les données de fonctionnement qui représentent un état de fonctionnement de l'actionneur (10),
on détermine différentes données fonctionnelles concernant des états de fonctionnement différents à partir des différentes zones de la courbe caractéristique,
on mesure en continu la pression et on compare la courbe caractéristique à un nombre défini et limité de valeurs de référence de la pression pour des instants de référence discrets, fixés (t₁ ; t₂) et/ou on détermine l'écart par rapport aux valeurs de référence.

2. Procédé de surveillance d'un état de fonctionnement d'un actionneur entraîné par pression (10) et muni d'une chambre d'actionneur (12) délimitée au moins par segments, par une paroi flexible, déformable (14), selon lequel on active l'actionneur (10) en appliquant la pression à la chambre d'actionneur (12) par une alimentation en pression de fonctionnement (16),
on exécute un processus de travail pour activer l'actionneur, ce processus se traduisant par le passage de l'actionneur (10) d'une configuration initiale à une configuration finale,
à l'aide d'une installation de capteur (24) on mesure, en fonction du temps, la pression qui alimente la chambre d'actionneur (12) pendant la transition entre la configuration initiale et la configuration finale,
on détermine le chronogramme de la pression sur la courbe caractéristique (a, b, c, d) représentant le processus de travail et on l'enregistre dans une mémoire (26), procédé **caractérisé en ce qu'**on compare la courbe caractéristique déterminée à une courbe caractéristique de référence, enregistrée dans une mémoire (26) et/ou on détermine l'écart par rapport à la courbe caractéristique de référence, et
à partir du tracé de la courbe caractéristique et/ou de l'amplitude d'écarts par rapport à la courbe caractéristique de référence, on détermine les données fonctionnelles qui représentent un état de fonctionnement de l'actionneur (10), à partir de différentes zones de la courbe caractéristique on détermine différentes données fonctionnelles concernant des états de fonctionnement différents, on ne mesure la pression qu'à des intervalles de temps définis (t₁; t₂) à partir du début du processus de travail et on compare la courbe caractéristique à un nombre défini et limité de valeurs de référence de la pression pour des instants de référence fixés et discrets (t₁; t₂) et/ou on détermine l'écart des valeurs de référence.

3. Procédé selon la revendication 1 ou 2, **caractérisé en ce qu'**à partir des données de fonctionnement, on détermine le poids d'un objet aspiré, on détermine l'état d'usure de l'actionneur, l'état de compression actuel de la chambre d'actionneur et/ou l'état de déformation actuel de la chambre d'actionneur.

4. Procédé selon l'une des revendications précédentes, **caractérisé en ce qu'**on règle l'alimentation en pression de fonctionnement (16) et/ou on règle l'application de la pression à la chambre de travail (12) de façon que la pression dans la chambre d'actionneur (12) corresponde, à des intervalles de temps définis à partir du début du processus de travail, à une valeur de consigne respective, prédéfinie, ou que l'écart par rapport à la valeur de consigne respective prédéterminée corresponde au maximum à un écart de tolérance prédéfini.

5. Procédé selon l'une des revendications 1 à 3, **caractérisé en ce que** pour activer l'actionneur (10) pour exécuter le processus de travail, l'alimentation en pression de fonctionnement (16) fournit une puissance définie et/ou un débit volumique défini de fluide de travail.

6. Procédé selon l'une des revendications précédentes, **caractérisé en ce qu'**en plus du processus de travail, on effectue un processus de calibrage consistant à solliciter l'actionneur avec une charge définie et reproductible et l'alimentation en pression de fonctionnement (16) fournit une puissance définie et/ou un débit volumique défini de fluide de travail, l'actionneur (10) passant de la configuration initiale à la configuration finale, et la dépendance de la pression en fonction du temps se détermine sous la forme d'une courbe caractéristique de référence représentant le chronogramme de pression et on l'enregistre dans une mémoire (26).

7. Procédé selon l'une des revendications précédentes, **caractérisé en ce qu'**à partir du chronogramme de la pression mesurée, on déterminer une force qui agit comme charge sur l'actionneur (10).

8. Procédé selon l'une des revendications précédentes, **caractérisé en ce qu'**on effectue un grand nombre de processus de travail, répétés de manière cyclique et qui se suivent.

9. Actionneur (10) entraîné par une pression et qui comporte une chambre d'actionneur (12) délimitée au moins par segment, par une paroi flexible, déformable (14) de façon que l'actionneur (10) soit activé par l'application de pression à la chambre d'actionneur (12), l'actionneur (10) passant d'une configuration initiale à une configuration finale par la déformation de la paroi flexible déformable (14), et comprenant une installation de capteur (24) pour mesurer la pression sollicitant la chambre d'actionneur (12) en fonction du temps, **caractérisé en ce qu'**il comporte une installation de commande (26) pour exécuter le procédé selon l'une des revendications 1 à 8.

10. Actionneur (10) entraîné par une pression selon la revendication 9, dans lequel l'actionneur (10) comporte un dispositif de préhension par dépression avec une chambre d'aspiration (12) constituant la chambre d'actionneur qui est mise en dépression pour prendre un objet (22).

11. Actionneur entraîné par la pression selon la revendication 9, dans lequel l'actionneur est un élévateur de tuyau ayant une cavité à tuyau formant la chambre d'actionneur d'un tuyau de levage, et le tuyau de levage passant d'une configuration initiale déployée à une configuration finale rétractée par une dépression sollicitant le volume intérieur du tuyau.
